# FASCICULE DE BREVET EUROPEEN

(11) **EP 4 025 931 B1**
(45) Date de publication et mention de la délivrance du brevet: **24.04.2024**
(21) Numéro de dépôt: 20775697.4
(22) Date de dépôt: 31.08.2020
(51) Int. Cl.: G01S 7/481, G01S 17/93

(54) **SYSTÈME DE MESURE LIDAR INTÉGRÉ ET COMPACT**
INTEGRIERTES UND KOMPAKTES LIDAR-MESSSYSTEM
INTEGRATED AND COMPACT LIDAR MEASUREMENT SYSTEM

(30) Priorité: 02.09.2019 FR 1909621
(43) Date de publication de la demande: 13.07.2022
(73) Titulaire: Yellowscan, 34980 Montferrier-Sur-Lez (FR)
(72) Inventeur: ALLOUIS, Tristan, 34070 MONTPELLIER (FR); DOUKKALI, Nassim, 34570 VAILHAUQUES (FR); ASSENBAUM, Michel, 34150 MONTPEYROUX (FR)
(74) Mandataire: IP Trust
(86) Numéro de dépôt international: PCT/FR2020/051515
(87) Numéro de publication internationale: WO 2021/044095

(56) Documents cités:
- US-A1- 2009 046 752
- US-A1- 2013 010 307
- US-A1- 2018 052 378
- US-A1- 2018 107 221

## Description

### DOMAINE DE L'INVENTION

La présente invention concerne un système de mesure LIDAR intégré et compact.

### ARRIERE PLAN TECHNOLOGIQUE DE L'INVENTION

Le LIDAR est une technique de télédétection permettant de déterminer la distance à un objet par la mesure du temps de vol d'une impulsion laser entre son émission et sa réflexion sur l'objet. Le laser émet jusqu'à plusieurs millions d'impulsions par seconde. Le télémètre laser peut être couplé à des moyens de balayage (scanner) permettant de spatialiser les mesures dans un espace 2D ou 3D et ainsi restituer une scène observée sous forme de nuage de points dont l'origine est le centre de mesure du scanner. La combinaison du télémètre laser et des moyens de balayage est souvent désignée par l'expression « scanner laser » Un tel scanner laser peut être associé à un dispositif de localisation permettant de le géolocaliser et d'en déterminer l'attitude. On peut alors combiner les informations de distance fournies par le scanner laser à celles fournies par le dispositif de localisation (position, attitude) pour élaborer un nuage de points 3D géoréférencés.

Le document US 2013/010307 A1 divulgue un tel dispositif, destiné à reposer statiquement, sur le sol afin d'élaborer une « image » de son environnement.

Le système de mesure LIDAR, composé du scanner laser couplé au dispositif de localisation, peut être porté par un véhicule, tel qu'un véhicule automobile ou un engin volant, qui est susceptible de se déplacer. On peut alors restituer le modèle 3D géoréférencé d'une scène même lorsque cette scène est géographiquement étendue. Le système de mesure LIDAR peut aussi être couplé à un dispositif de prise de vues, dans le but d'associer à chaque mesure, c'est-à-dire à chaque point géoréférencé, une information de couleur. Lorsqu'il est porté par un véhicule, le système de mesure LIDAR est susceptible de subir des chocs et des vibrations, contre lesquels il doit être protégé afin de préserver son intégrité et la fidélité des mesures.

Un système de mesure LIDAR est généralement obtenu en assemblant l'un à l'autre un scanner laser et un dispositif de localisation, indépendant l'un de l'autre. Il serait généralement souhaitable de disposer d'un système de mesure LIDAR robuste et compact, notamment lorsque ce système est destiné à être embarqué sur un véhicule, et plus particulièrement lorsque ce véhicule est autonome. Cette compacité peut être obtenue en intégrant les composants formant le scanner laser et le dispositif de localisation.

Cette recherche de compacité bute toutefois sur le besoin d'évacuation de la chaleur qui se dissipe des composants du système au cours de leur fonctionnement. Cette problématique thermique est exacerbée lorsque le système est exploité dans un environnement rude, par exemple exposé à la poussière ou à l'humidité. Cela impose de protéger les composants de manière étanche dans un boîtier de protection, ce qui ne favorise pas l'évacuation de la chaleur. Dans certains cas, le système de mesure LIDAR peut être disposé à l'écart de tout flux d'air qui pourrait contribuer à le refroidir, par exemple lorsqu'il est placé à l'intérieur du fuselage d'un drone caréné.

### OBJET DE L'INVENTION

Un but de l'invention est de proposer un système de mesure LIDAR présentant ces propriétés de robustesse, d'étanchéité et de compacité tout en évacuant efficacement la chaleur produit par ses composants.

### BREVE DESCRIPTION DE L'INVENTION

En vue de la réalisation de ce but, l'objet de l'invention propose un système de mesure LIDAR comprenant :
- un châssis comprenant une pluralité de longerons reliés entre eux pour définir un espace interne ;
- un scanner laser, comprenant une source laser et un bloc de détection, fixé à une extrémité du châssis et présentant au moins une partie émergente, disposée hors de l'espace interne ;
- un dispositif de localisation fixée sans aucun degré de liberté au bloc de détection et disposé de manière flottante dans l'espace interne ;
- un dispositif de refroidissement comprenant au moins un collecteur thermique disposé dans le système de mesure et thermiquement relié à un échangeur de chaleur ;
- un boîtier de protection étanche fixé au châssis.

Selon d'autres caractéristiques avantageuses et non limitatives de l'invention, prises seules ou selon toute combinaison techniquement réalisable :
- le bloc de détection comprend au moins un photodétecteur ;
- la source laser et le bloc de détection sont fixés au châssis par l'intermédiaire d'un unique point de fixation, de préférence flexible ;
- le scanner laser comprend un dispositif optique entraîné par un moteur pour balayer une scène avec un faisceau lumineux produit par la source laser ;
- la source laser est configurée pour illuminer une scène avec un faisceau lumineux large et le bloc de détection comprend une matrice de photodétecteurs ;
- la source laser et le bloc de détection sont entraînés par un moteur ;
- le dispositif de localisation est fixé au châssis par l'intermédiaire d'un unique point de fixation, de préférence flexible ;
- le système de mesure comprend un logement pour recevoir une batterie amovible, le logement étant assemblé de manière étanche au boîtier ;
- le système de mesure comprend au moins un capteur de température ;
- le dispositif de refroidissement comprend un ventilateur ;
- le dispositif de refroidissement comprend au moins un conduit d'un fluide caloporteur reliant thermiquement le collecteur thermique à l'échangeur de chaleur ;
- le scanner laser comprend une pluralité d'unités électroniques et un collecteur thermique est thermiquement associé à chaque unité électronique ;
- le châssis comprend un dispositif de fixation pour mécaniquement fixer le système de mesure à un support ou à un véhicule ;
- le système de mesure comprend un dispositif de prise de vue solidaire du châssis.

### BREVE DESCRIPTION DES FIGURES

D'autres caractéristiques et avantages de l'invention ressortiront de la description détaillée de l'invention qui va suivre en référence aux figures annexées sur lesquels :
- La figure 1 représente une vue d'ensemble d'un système de mesure LIDAR conforme à l'invention ;
- La figure 2 représente un schéma fonctionnel exposant les principes de fonctionnement d'un système de mesure conforme à l'invention ;
- Les figures 3a et 3b représentent deux vues de la structure interne d'un système de mesure conforme à l'invention.

### DESCRIPTION DETAILLEE DE L'INVENTION

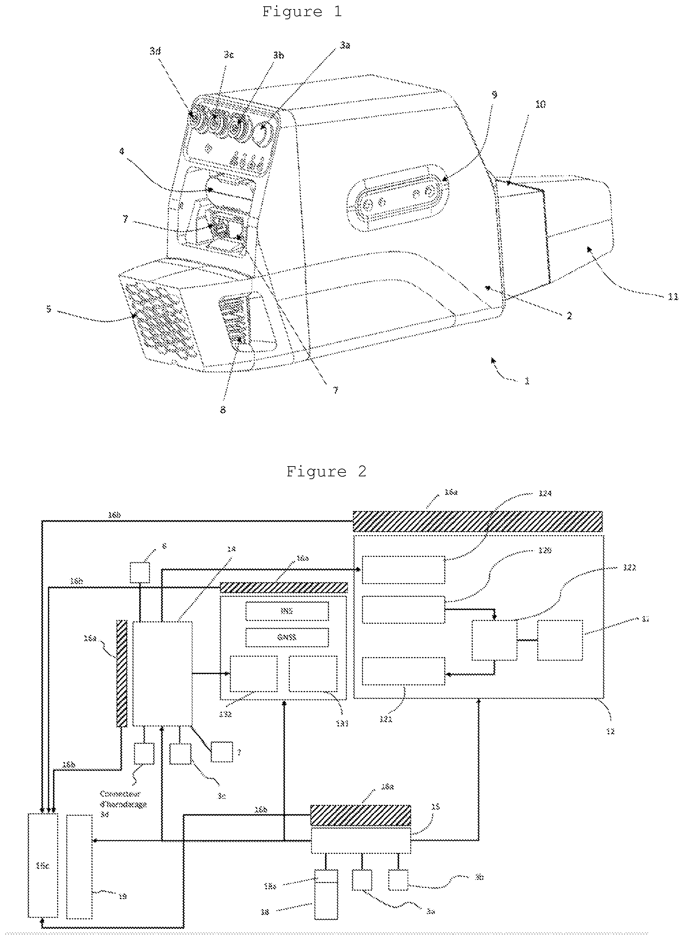

La figure 1 représente une vue d'ensemble d'un système de mesure LIDAR 1 conforme à l'invention.

Un boîtier de protection 2 étanche aux fluides et la poussière définit une surface extérieure du système de mesure 1 et protège de l'environnement extérieur les composants de ce système. Dans l'exemple représenté, une façade du boîtier 2 expose une pluralité de boutons de commande et de connecteurs formant une interface utilisateur.

Plus précisément, la façade du boîtier de protection 2 est munie d'un interrupteur de mise en marche 3a du système, relié à une unité d'alimentation électrique disposée à l'intérieur du boîtier 2. Il est également muni d'un connecteur d'alimentation électrique externe 3b également relié à l'unité d'alimentation électrique. Un clapet 4 obstrue une ouverture d'un logement destiné à recevoir une batterie amovible 18 (figure 2). Le fond du logement est muni d'un connecteur dans lequel la batterie 18 peut s'enficher lorsqu'elle est introduite par glissement dans le logement. Le connecteur de batterie 18a est électriquement relié à l'unité d'alimentation électrique. Le logement est assemblé de manière étanche au boîtier 2 et définit un espace de réception de la batterie 18 qui ne communique pas avec l'espace interne définie par le boîtier de protection 2. On s'assure ainsi que les poussières ou les fluides qui pourraient pénétrer dans le logement de la batterie ne circulent pas à l'intérieur du système de mesure 1.

Le système de mesure 1 peut être indifféremment utilisé en exploitant l'énergie de la batterie 18 ou d'une autre source d'énergie électrique externe à laquelle il est relié par l'intermédiaire du connecteur d'alimentation électrique 3b. Il peut par exemple s'agir de la source d'énergie électrique propulsant le véhicule sur lequel le système de mesure peut être fixé. La batterie 18 est avantageusement amovible, ce qui permet de la remplacer rapidement lorsque son énergie est épuisée. On rend disponible de la sorte le système de mesure 1 sans avoir besoin de le relier régulièrement à une source d'énergie pour le recharger.

Sur la façade d'interface du boîtier de protection 2, on retrouve également un connecteur de données 3c, relié à une unité de commande du système 1. Ce connecteur est destiné à relier le système de mesure 1 à un dispositif de transmission, par exemple un modem ou un système de transmission radio, externe au système de mesure 1 et permettant de téléverser les mesures effectuées par le système 1 à une station de base au cours d'une campagne de mesures.

Comme on l'a mentionné en introduction de cette demande, le système de mesure 1 peut comprendre un dispositif de prise de vue. Celui-ci peut être rendu solidaire du système de mesure 1 par l'intermédiaire de moyens conventionnels de fixation de ce dispositif sur une surface de réception 5 du boîtier de protection 2, par exemple par un mécanisme à baïonnette. On cherche dans tous les cas à fixer le dispositif de prise de vue sans aucun degré de liberté au scanner laser et au dispositif de localisation. Les moyens de fixation peuvent notamment permettre de fixer le dispositif de prise de vue à un châssis du système de mesure 1.

Pour opérer le dispositif de prise de vue, on a prévu sur la façade d'interface un connecteur d'horodatage 3d permettant de relier par un câble le dispositif à l'unité de commande et/ou d'alimentation au système 1. L'unité de commande peut alors déclencher les prises de vues ou celles-ci être déclenchées de manière autonome par le système de prise de vue, par exemple dans un mode « time lapse ». L'unité de commande peut recevoir du dispositif de prise de vue et par l'intermédiaire du connecteur d'horodatage 3d des signaux synchrones aux instants de prise de vue. Ces signaux peuvent être horodatés à l'aide d'une base de temps du dispositif de localisation et rendus disponibles par l'unité de calcul de localisation.

Dans un mode de mise en oeuvre non représenté, le connecteur d'horodatage 3d est intégré aux moyens de fixation du dispositif de prise de vue, de sorte que le dispositif puisse être raccordé électriquement à l'unité de commande sans nécessité de câble de liaison additionnel. On peut bien entendu prévoir de munir le système de mesure à la fois d'un tel connecteur d'horodatage intégré et d'un connecteur d'horodatage séparé comme celui représenté sur la figure 1.

On a également pourvu la façade d'un connecteur d'entrée-sortie 7, par exemple de type RJ45, pour connecter l'unité de commande à un dispositif de calcul extérieur en vue de paramétrer, de diagnostiquer et plus généralement de contrôler le système de mesure 1.

Bien entendu, un système de mesure 1 conforme à la présente invention peut présenter, selon le besoin, d'autres connecteurs et d'autres éléments d'interface ou omettre certains de ceux qui ont été présentés ici à titre d'illustration.

Poursuivant la description de la figure 1, le boîtier de protection 2 présente une ouverture 8 permettant d'exposer une face émergente d'un échangeur de chaleur 16c (figure 2) faisant partie d'un dispositif de refroidissement du système de mesure 1 qui fera l'objet d'une description détaillée dans une partie ultérieure de cette description. À nouveau, la liaison entre le boîtier 2 et l'échangeur de chaleur 16c est étanche, et on peut par exemple prévoir un joint ou tout autre élément d'étanchéité disposé entre ces deux parties pour prévenir le passage de fluide et de poussières à l'intérieure du boîtier 2.

Sur une autre face du boîtier de protection 2, on trouve au moins un dispositif de fixation 9 du système de mesure 1 permettant de le solidariser par exemple par un pas de vis conventionnel à un véhicule ou à un support fixe. L'élément de fixation 9 est solidaire d'un châssis dont une des fonctions et d'absorber les efforts/les vibrations du véhicule ou du support, transmis au système de mesure par l'intermédiaire de l'élément de fixation 9 et pour éviter que les composants actifs du système soient excessivement sollicités par ces perturbations mécaniques. Dans l'exemple représenté sur la figure 1, une partie émergente 10, 11 d'un scanner laser forme une extrémité du système de mesure 1. Cette partie émergente comprend une fenêtre transparente périphérique 10 protégeant le dispositif optique du scanner laser, entraîné par un moteur lui-même protégé par un capot de tête 11. Le dispositif optique, par exemple un dispositif à base de miroir tournant, est ici entraîné en rotation de manière à pouvoir balayer une scène avec un faisceau lumineux produit par une source laser du scanner laser.

La fenêtre 10 et le capot de tête 11 forment des pièces du boîtier de protection 2. Lorsqu'elles ne se font pas partie intégrante de ce boîtier, les pièces sont configurées pour s'assembler de manière étanche au reste du boîtier, par exemple en les munissant de joints de liaison. La forme généralement tronconique de la partie émergente 10, 11 du scanner laser permet de conférer un profil aérodynamique au système de mesure 1. Ce profil est avantageux lorsque le système de mesure 1 est fixé à l'extérieur d'un véhicule, par exemple un drone, par l'intermédiaire de l'élément de fixation 9 et qu'il est directement exposé au flux d'air lors de son fonctionnement.

On a représenté sur la figure 2, un schéma fonctionnel exposant les principes de fonctionnement d'un système de mesure 1 conforme à l'invention. Sur ce schéma on a représenté un scanner laser 12 constitué d'une source laser 120 et d'un bloc de détection 121 comprenant au moins un photodétecteur, par exemple une photodiode. Le scanner laser 12 de l'exemple représenté comprend un dispositif optique 122, ici un miroir tournant mis en mouvement par un moteur 123. Comme on l'a déjà énoncé, le dispositif optique 122 est disposé en vis-à-vis de la fenêtre transparente périphérique 10 et le moteur 123 est logé dans le capot de tête 12 du boîtier de protection 2.

Comme cela est bien connu en soi, un faisceau lumineux émis par la source laser 120 est projeté sur une scène par le dispositif optique 122 pour la balayer. Le faisceau réfléchi par la scène est dirigé vers le bloc de détection 121. Une unité de traitement 124 du scanner laser, reliée à la source 120 et au bloc de détection 121, synchronise la source 120 et le bloc de détection 121. Elle détermine le temps de vol du faisceau entre son émission par la source laser 120 et sa réception au niveau du bloc de détection 121 pour estimer une mesure de distance séparant le système de mesure 1 du point éclairé de la scène.

D'autres configurations du scanner laser 12 sont possibles. Ainsi, dans une alternative, une partie au moins de la source 120 et du bloc de section 121 sont mis en mouvement par le moteur 123. Il n'est donc pas nécessaire dans ce cas de prévoir un dispositif optique 122 mobile. Les communications optiques et électriques peuvent circuler par l'intermédiaire de l'axe du moteur 123 et les données communiquées être traitées par l'unité de traitement 124.

Dans une autre configuration encore, le scanner laser 12 ne présente pas de parties mobiles, et donc pas de moteur 123. La source laser 120 dans ce cas illumine la scène à l'aide d'un faisceau de très large section et le bloc de détection 121 est formé d'une matrice de photodétecteurs.

Le dispositif de localisation 13 comprend plusieurs composants permettant de repérer géographiquement et de déterminer l'attitude du système de mesure 1. Il comprend notamment un système de navigation inertielle INS, éventuellement assorti d'un magnétomètre 131, de manière à pouvoir déterminer l'attitude du système 1. Il comprend également un système de navigation par satellite GNSS permettant de repérer le système 1 géographiquement. Les données brutes fournies par les systèmes de navigation inertielle INS et par satellite GNSS sont fusionnées et rendues disponibles par une unité de calcul de localisation 132.

Le scanner laser 12 est mécaniquement fixé, sans aucun degré de liberté, au dispositif de localisation 13. De préférence, le dispositif de localisation 13 (et plus particulièrement le système de navigation inertielle) est solidaire, sans aucun degré de liberté, du bloc de détection 121 du scanner laser 12.

Cette liaison mécanique sans aucune mobilité possible est une caractéristique importante du système de mesure 1. Elle assure de pouvoir repérer avec précision dans l'espace, à l'aide du dispositif de localisation 13, une mesure de distance opérée par le scanner laser 12. Cette précision ne pourrait être atteinte si la liaison possédait un degré de liberté non bloqué, car on ne pourrait connaître avec certitude et en permanence la direction pointée par le scanner laser, voire même sa position, ce qui est impératif lorsque le système de mesure est destiné à être monté sur un véhicule. On détaillera dans un passage ultérieur de cette description comment cette liaison peut être réalisée.

Poursuivant la description du schéma de principe représenté sur la figure 2, le système de mesure 1 comprend également une unité de commande 14. Celle-ci est reliée aux unités de traitement 124 et de calcul 132 par l'intermédiaire d'un bus de données de manière à pouvoir les superviser et échanger toute information nécessaire au bon fonctionnement de l'ensemble. L'unité de commande 14 peut notamment configurer le scanner laser 12 et le dispositif de localisation 13, les commander, les interroger et collecter les mesures produites pour les enregistrer dans une mémoire. La mémoire de l'unité de commande 14 peut être une mémoire amovible, et on a prévu sur la façade du boîtier de protection 2 une ouverture étanche 6 permettant d'insérer ou d'extraire cette mémoire amovible afin de la connecter à l'unité de commande.

Alternativement, ou en complément, les mesures peuvent être adressées par l'unité de commande 14 sur une interface de communication reliée au connecteur de données 3c, afin par exemple de transmettre les mesures au fur et à mesure de leur acquisition à l'aide d'un modem ou d'un dispositif de transmission radio externe et relié au connecteur 3c.

L'unité de commande 14 présente au moins un port d'entrée-sortie relié au connecteur d'entrée-sortie 7 pour se connecter à un dispositif de calcul extérieur. Enfin, l'unité de commande 14 est également reliée électriquement au connecteur d'horodatage 3d, pour commander le déclenchement du dispositif de prise de vue lorsque le système de mesure 1 en est équipé. L'unité de commande 14 est configurée pour associer chaque prise de vue, dont l'instant effectif peut lui être fourni par le dispositif de prise vue via l'interface de synchronisation, aux informations d'horodatage fournies par le dispositif de localisation 13 pour la repérer géographiquement.

Le système de mesure 1 prévoit également une unité d'alimentation 15 qui traître l'énergie prélevée de la batterie 18 via le connecteur de batterie 18a ou l'énergie reçue via connecteur d'alimentation externe 3b, pour la conditionner selon une pluralité de tensions utiles (par exemple de 3 V, 5 V et 12 V). Ces tensions sont distribuées aux différents composants du système de mesure 1 par l'intermédiaire d'un bus d'alimentation. L'unité d'alimentation 15 peut notamment distribuer les tensions nécessaires au fonctionnement des unités de commandes 14, de calcul 132, de traitement 124 ainsi qu'aux autres composants actifs tels que la source laser 120, le bloc de détection 121, le moteur 123, les systèmes de navigation inertielle INS et par satellite GNSS. L'unité d'alimentation 15 est reliée à l'interrupteur de mise en marche 3a pour engager le démarrage/l'extinction du système de mesure 1.

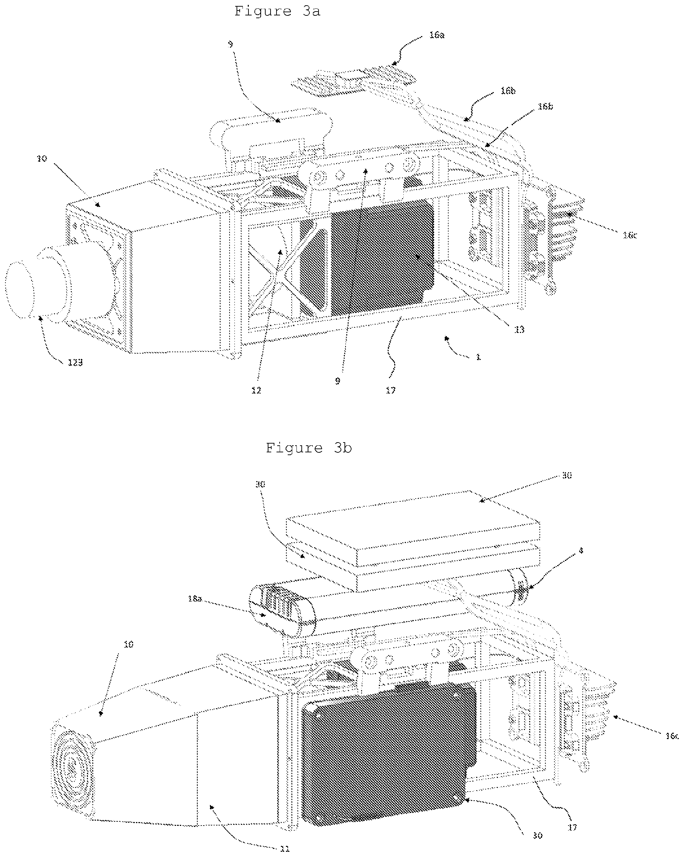

Les différentes unités électroniques composant le système, à savoir l'unité de traitement 124, d'alimentation 15, de commande 14 et de calcul 132 peuvent être réalisées sous la forme de cartes électroniques 30 (figure 3b). Chaque carte électronique 30 peut comprendre un ou plusieurs microprocesseurs ou microcontrôleurs, ou toute autre forme de moyens de calcul, tels que des FPGA. Ces cartes 30 sont également munies de mémoire et de tout autre composant matériel et logiciel permettant de mettre en oeuvre les fonctions décrites. On pourrait naturellement envisager, tout en restant dans le cadre de la présente invention, de répartir les besoins de calcul du système de mesure 1 selon un autre découpage, mettant en oeuvre plus d'unités ou moins d'unités électroniques que celles qui ont été décrites à titre d'illustration.

Comme cela sera exposé dans la suite de cet exposé, l'ensemble des composants du système de mesure 1 qui vient d'être décrit de manière détaillée est intégré de manière compacte à l'intérieur du boîtier de protection 2 afin de le protéger des fluides et des poussières. En fonctionnement, ces composants dégagent une grande quantité de chaleur qu'il est nécessaire d'évacuer en dehors du boîtier de protection 2, sans toutefois compromettre son caractère étanche. À cet effet, le système de mesure 1 est muni d'un dispositif de refroidissement. Celui-ci comprend au moins un collecteur thermique 16a, et de préférence une pluralité de collecteurs thermiques 16a, disposé ou répartis dans le système au niveau de ses points chauds. Il peut s'agir de plaques métalliques, par exemple en aluminium, disposées en contact intime sur les composants avec lesquels ils sont respectivement associés de manière à collecter leur chaleur. Un collecteur thermique 16a peut ainsi être mis en contact avec la source laser 120, le dispositif de localisation 13, et avec chacune des unités électroniques de commande 14, d'alimentation 15, de traitement 124, et de calcul 132. Certains collecteurs 16a peuvent être associés à deux de ces composants, par exemple insérés en sandwich entre deux composants.

Le dispositif de refroidissement comprend également au moins un conduit 16b (et de préférence une pluralité de conduits 16b) d'un fluide caloporteur reliant les collecteurs 16a à l'échangeur de chaleur 16c dont une face émergente est exposée à travers l'ouverture 8 aménagée sur le boîtier de protection 2. L'énergie calorifique prélevée par les collecteurs 16a est amenée par le fluide caloporteur jusqu'à l'échangeur de chaleur 16c. Pour favoriser l'échange thermique avec l'environnement extérieur, cet échangeur 16c peut être muni d'une pluralité d'ailettes exposées à l'environnement extérieur du système de mesure 1 à travers l'ouverture 8 du boîtier 2.

Pour favoriser encore plus cet échange, on peut prévoir un ventilateur 19 disposé à l'intérieur du boîtier de protection 2 pour créer un flux d'air se projetant sur une partie de l'échangeur de chaleur 16c disposé à l'intérieur du boîtier 2. Le ventilateur 19, alimenté électriquement par l'unité d'alimentation 15, peut être mis en fonctionnement de manière permanente au démarrage du système de mesure, ou sur commande de l'unité de commande 14, lorsque la température à l'intérieur du boîtier de protection 2 ou au niveau de l'un de ses composants est excessive. Pour cela, le système de mesure 1 peut prévoir un ou une pluralité de capteurs de température relié à l'unité de commande 14. On peut également prévoir que celle-ci soit configurée pour interrompre le fonctionnement du système de mesure 1 ou de l'un de ses composants, lorsque la température mesurée par un capteur excède une valeur seuil prédéterminée, afin d'éviter la détérioration du système de mesure 1 ou la dégradation de son fonctionnement.

En référence aux figures 3a et 3b, on montre comment le système 1 conforme à l'invention intègre de manière compacte et robuste l'ensemble des composants qui viennent d'être décrits à l'intérieur du boîtier protection 2.

On prévoit un châssis 17 composé d'une pluralité de longerons reliés entre eux. Dans l'exemple représenté, les longerons définissent les côtés d'un pavé droit, mais une telle configuration n'est donnée qu'à titre d'exemple, et les longerons sont, d'une manière plus générale, reliés entre eux pour définir un espace interne.

Le scanner laser 12 est fixé au châssis 17 de sorte qu'une partie émergente du scanner laser 12, ici le dispositif optique 122 et le moteur 123, soit disposée en dehors de l'espace interne. De la sorte, les longerons n'interceptent pas les faisceaux lumineux émis et réfléchis et ne perturbent pas les mesures. Dans l'exemple représenté, quatre longerons forment un cadre d'extrémité du châssis, et le dispositif optique 122 est fermement fixé ce cadre d'extrémité.

Comme on l'a déjà énoncé, le dispositif de localisation 13 (notamment le système de navigation inertielle) est fixé au scanner laser 12, et plus particulièrement au bloc de détection 121, sans aucun degré de liberté. On s'assure ainsi de la précision des mesures réalisées. Selon l'invention, le dispositif de localisation 13 est disposé dans l'espace interne défini par le châssis 17 afin d'être mécaniquement protégé. De plus, il n'est pas souhaitable que le dispositif de localisation 13 soit fermement fixé au châssis 17. Au contraire, dispositif de localisation 13 est monté flottant dans le châssis 17, solidairement fixé au scanner laser 12. Par « flottant » on signifie que le dispositif de localisation n'est pas fixé rigidement au châssis 17. On évite de la sorte de transmettre des efforts ou des vibrations, transmis par le châssis 17, au dispositif de localisation 13 ce qui tendrait à modifier ou à solliciter la liaison parfaitement rigide avec le scanner laser 12. On peut prévoir de retenir le dispositif de localisation 13 au châssis 17 à l'aide d'un unique point de fixation, avantageusement flexible, pour éviter tout mouvement excessif de ce dispositif.

Les autres composants du système de mesure LIDAR 1, et notamment la ou les cartes électroniques 30 portant les différentes unités électroniques 14, 15, 124 peuvent être rendus solidaires du châssis 17 de manière à former un ensemble très compact. Ils peuvent être indifféremment placés à l'intérieur de l'espace interne défini par le châssis 17 ou à l'extérieur de cet espace interne. On note qu'il n'est pas nécessaire de prendre un soin particulier dans l'agencement de ces composants pour gérer et dissiper l'énergie thermique qu'ils produisent, car le dispositif de refroidissement assure cette fonction à lui seul. Enfin, le boîtier de protection 2 peut être enserré sur l'ensemble formé du châssis 17 et des composants du système de mesure 1. Le boîtier peut également être retenu au châssis 17 pour bloquer tout déplacement du châssis 17 à l'intérieur du boîtier de protection 2.

## Revendications

1. Système de mesure LIDAR (1) comprenant :
- un châssis (17) comprenant une pluralité de longerons reliés entre eux pour définir un espace interne ;
- un scanner laser (12), comprenant une source laser (120) et un bloc de détection (121), fixé à une extrémité du châssis (17) et présentant au moins une partie émergente, disposée hors de l'espace interne ;
- un dispositif de localisation (13) solidairement fixé, sans aucun degré de liberté, au bloc de détection (121) et monté flottant dans le châssis (17), où « flottant » signifie que le dispositif de localisation n'est pas fixé rigidement au châssis;
- un dispositif de refroidissement comprenant au moins un collecteur thermique (16a) disposé dans le système de mesure (1) et thermiquement relié à un échangeur de chaleur (16c) ;
- un boîtier de protection (2) étanche fixé au châssis (17) .

2. Système de mesure (1) selon la revendication précédente dans lequel le bloc de détection (121) comprend au moins un photodétecteur.

3. Système de mesure (1) selon l'une des revendications précédentes dans lequel la source laser (120) et le bloc de détection (121) sont fixés au châssis (17) par l'intermédiaire d'un unique point de fixation, de préférence flexible.

4. Système de mesure (1) selon l'une des revendications précédentes dans lequel le scanner laser (12) comprend un dispositif optique (122) entraîné par un moteur (123) pour balayer une scène avec un faisceau lumineux produit par la source laser (120).

5. Système de mesure (1) selon l'une des revendications précédentes dans lequel la source laser (120) est configurée pour illuminer une scène avec un faisceau lumineux large et le bloc de détection (121) comprend une matrice de photodétecteurs.

6. Système de mesure (1) selon l'une des revendications précédentes dans lequel la source laser (120) et le bloc de détection (121) sont entraînés par un moteur (123).

7. Système de mesure (1) selon l'une des revendications précédentes dans lequel le dispositif de localisation (13) est fixé au châssis (17) par l'intermédiaire d'un unique point de fixation, de préférence flexible.

8. Système de mesure (1) selon l'une des revendications précédentes comprenant un logement pour recevoir une batterie (18), amovible, le logement étant assemblé de manière étanche au boîtier (2).

9. Système de mesure (1) selon l'une des revendications précédentes comprenant au moins un capteur de température.

10. Système de mesure (1) selon l'une des revendications précédentes dans lequel le dispositif de refroidissement comprend un ventilateur (19).

11. Système de mesure (1) selon l'une des revendications précédentes dans lequel le dispositif de refroidissement comprend au moins un conduit (16b) d'un fluide caloporteur reliant thermiquement le collecteur thermique (16a) à l'échangeur de chaleur (16c).

12. Système de mesure (1) selon l'une des revendications précédentes dans lequel le scanner laser (12) comprend une pluralité d'unités électroniques et dans lequel un collecteur thermique (16a) est thermiquement associé à chaque unité électronique.

13. Système de mesure (1) selon l'une des revendications précédentes dans lequel le châssis (17) comprend un dispositif de fixation (9) pour mécaniquement fixer le système de mesure (1) à un support ou à un véhicule.

14. Système de mesure (1) selon l'une des revendications précédentes comprenant un dispositif de prise de vue solidaire du châssis (17).

## Patentansprüche

1. LIDAR-Messsystem (1), umfassend:
- einen Rahmen (17), umfassend eine Vielzahl von Längsträgern, die miteinander verbunden sind, zum Definieren eines Innenraums;
- einen Laserscanner (12), umfassend eine Laserquelle (120) und einen Erkennungsblock (121), der an einem Ende des Rahmens (17) befestigt ist und mindestens einen austretenden Teil aufweist, der außerhalb des Innenraums angeordnet ist;
- eine Lokalisierungsvorrichtung (13), die ohne jeglichen Freiheitsgrad mit dem Erkennungsblock (121) fest verbunden ist und in dem Rahmen (17) schwimmend montiert ist, wobei "schwimmend" bedeutet, dass die Lokalisierungsvorrichtung nicht starr an dem Rahmen befestigt ist;
- eine Kühlvorrichtung, umfassend mindestens einen thermischen Kollektor (16a), der in dem Messsystem (1) angeordnet und mit einem Wärmetauscher (16c) thermisch verbunden ist;
- ein wasserdichtes Schutzgehäuse (2), das an dem Rahmen (17) befestigt ist.

2. Messsystem (1) nach dem vorstehenden Anspruch, wobei der Erkennungsblock (121) mindestens einen Fotodetektor umfasst.

3. Messsystem (1) nach einem der vorstehenden Ansprüche, wobei die Laserquelle (120) und der Erkennungsblock (121) über einen einzigen, vorzugsweise flexiblen Befestigungspunkt an dem Rahmen (17) befestigt sind.

4. Messsystem (1) nach einem der vorstehenden Ansprüche, wobei der Laserscanner (12) eine optische Vorrichtung (122), die durch einen Motor (123) angetrieben wird, zum Abtasten einer Szene mit einem Lichtstrahl umfasst, der durch die Laserquelle (120) erzeugt wird.

5. Messsystem (1) nach einem der vorstehenden Ansprüche, wobei die Laserquelle (120) zum Beleuchten einer Szene mit einem breiten Lichtstrahl konfiguriert ist und der Erkennungsblock (121) ein Array von Fotodetektoren umfasst.

6. Messsystem (1) nach einem der vorstehenden Ansprüche, wobei die Laserquelle (120) und der Erkennungsblock (121) durch einen Motor (123) angetrieben werden.

7. Messsystem (1) nach einem der vorstehenden Ansprüche, wobei die Lokalisierungsvorrichtung (13) über einen einzigen, vorzugsweise flexiblen Befestigungspunkt an dem Rahmen (17) befestigt ist.

8. Messsystem (1) nach einem der vorstehenden Ansprüche, umfassend eine Aufnahme zum Empfangen einer herausnehmbaren Batterie (18), wobei die Aufnahme wasserdicht mit dem Gehäuse (2) zusammengefügt ist.

9. Messsystem (1) nach einem der vorstehenden Ansprüche, umfassend mindestens einen Temperatursensor.

10. Messvorrichtung (1) nach einem der vorstehenden Ansprüche, wobei die Kühlvorrichtung einen Ventilator (19) umfasst.

11. Messsystem (1) nach einem der vorstehenden Ansprüche, wobei die Kühlvorrichtung mindestens eine Leitung (16b) für ein Wärmeträgerfluid umfasst, die den thermischen Kollektor (16a) mit dem Wärmetauscher (16c) thermisch verbindet.

12. Messsystem (1) nach einem der vorstehenden Ansprüche, wobei der Laserscanner (12) eine Vielzahl von elektronischen Einheiten umfasst und wobei ein thermischer Kollektor (16a) jeder elektronischen Einheit thermisch zugeordnet ist.

13. Messsystem (1) nach einem der vorstehenden Ansprüche, wobei der Rahmen (17) eine Befestigungsvorrichtung (9) zum mechanischen Befestigen des Messsystems (1) an einem Träger oder an einem Fahrzeug umfasst.

14. Messsystem (1) nach einem der vorstehenden Ansprüche, umfassend eine Bildaufnahmevorrichtung, die mit dem Rahmen (17) fest verbunden ist.

## Claims

1. LIDAR measurement system (1) comprising:
- a frame (17) comprising a plurality of side members connected to each other in order to define an internal space;
- a laser scanner (12), comprising a laser source (120) and a detection unit (121), attached to one end of the frame (17) and having at least one projecting portion which is arranged outside the internal space;
- a tracking device (13) securely attached, without any degree of freedom, to the detection unit (121) and floatingly mounted in the frame (17), where "floating" means that the tracking device is not rigidly attached to the frame;
- a cooling device comprising at least one heat collector (16a) arranged in the measurement system (1) and thermally connected to a heat exchanger (16c);
- a sealed protective case (2) attached to the frame (17).

2. Measurement system (1) according to the preceding claim, wherein the detection unit (121) comprises at least one photodetector.

3. Measurement system (1) according to either of the preceding claims, wherein the laser source (120) and the detection unit (121) are attached to the frame (17) via a single, preferably flexible, attachment point.

4. Measurement system (1) according to any of the preceding claims, wherein the laser scanner (12) comprises an optical device (122) driven by a motor (123) for scanning a scene with a light beam produced by the laser source (120).

5. Measurement system (1) according to any of the preceding claims, wherein the laser source (120) is configured to illuminate a scene with a wide light beam and the detection unit (121) comprises a matrix of photodetectors.

6. Measurement system (1) according to any of the preceding claims, wherein the laser source (120) and the detection unit (121) are driven by a motor (123).

7. Measurement system (1) according to any of the preceding claims, wherein the tracking device (13) is attached to the frame (17) via a single, preferably flexible, attachment point.

8. Measurement system (1) according to any of the preceding claims, comprising a recess for receiving a removable battery (18), the recess being sealingly assembled to the case (2).

9. Measurement system (1) according to any of the preceding claims, comprising at least one temperature sensor.

10. Measurement system (1) according to any of the preceding claims, wherein the cooling device comprises a fan (19).

11. Measurement system (1) according to any of the preceding claims, wherein the cooling device comprises at least one pipe (16b) for a heat transfer fluid, which pipe thermally connects the heat collector (16a) to the heat exchanger (16c).

12. Measurement system (1) according to any of the preceding claims, wherein the laser scanner (12) comprises a plurality of electronic units and wherein a heat collector (16a) is thermally associated with each electronic unit.

13. Measurement system (1) according to any of the preceding claims, wherein the frame (17) comprises an attachment device (9) for mechanically attaching the measurement system (1) to a support or to a vehicle.

14. Measurement system (1) according to any of the preceding claims, comprising a camera device secured to the frame (17).
